# FASCICULE DE BREVET EUROPEEN

(11) **EP 1 318 297 B1**
(45) Date de publication et mention de la délivrance du brevet: **04.04.2007**
(21) Numéro de dépôt: 02292854.3
(22) Date de dépôt: 15.11.2002
(51) Int. Cl.: F02N 15/02, F02N 15/06, F16F 15/131, F16H 55/14

(54) **Volant de démarrage anti-bruit**
Schalldämpfendes Anlasschwungrad
Noise-free starter flywheel

(30) Priorité: 04.12.2001 FR 0115654
(43) Date de publication de la demande: 11.06.2003
(73) Titulaire: DEFONTAINE, 85530 La Bruffière (FR)
(72) Inventeur: Bonnefous, Jean, 44400 Reze (FR); Douillard, Frank, 85610 La Bernardiere (FR); Gaudu, Serge, 85600 Montaigu (FR)
(74) Mandataire: Rémont, Claude

(56) Documents cités:
- DE-A- 3 132 503
- FR-A- 788 061
- FR-A- 2 797 919
- FR-A- 2 799 253
- US-A- 2 060 565
- PATENT ABSTRACTS OF JAPAN vol. 2000, no. 23, 10 février 2001 (2001-02-10) & JP 2001 173544 A (ISUZU MOTORS LTD), 26 juin 2001 (2001-06-26)

## Description

La présente invention concerne un volant apte à être engrené avec un pignon de démarreur utilisé pour le démarrage des moteur à combustion interne, notamment pour les véhicules tels que les automobiles (FR-A-2 797 919).

On connaît des volants du type comprenant un support adapté à être monté axialement sur l'arbre de sortie du moteur et une couronne dentée qui possède une extrémité périphérique interne par laquelle elle est fixée à l'extrémité périphérique externe du support.

On sait qu'un bruit important est émis lors du démarrage d'un moteur à combustion interne. Ce bruit représente une gêne non seulement pour le conducteur et les passagers du véhicule, mais aussi pour les passants. Et les multiples démarrages amplifient cette gêne. Cette gêne acoustique ternit l'image du véhicule.

Le bruit de démarrage est généré par la pénétration du pignon du démarreur dans la couronne dentée du volant, puis par l'engrènement de ces deux pièces.

Une des causes de la puissance importante du bruit est le faible rapport d'engrenage entre le nombre de dents du pignon du démarreur qui comprend normalement 7, 9, voire 11 dents, et le nombre de dents de la couronne dentée qui en comprend entre 95 et 150.

Le bruit ainsi émis est transmis d'une part, par voie aérienne (dans une très faible proportion), et, d'autre part, par voie solide, c'est à dire par la transmission de la couronne dentée au support, puis au vilebrequin, et enfin au reste du groupe motopropulseur.

Une solution proposée dans l'art antérieur est d'augmenter le nombre de dents du pignon. On a ainsi, dans certains modèles de démarreur des pignons avec 21 dents. Toutefois le rapport reste faible et le bruit du démarrage persiste.

Une autre solution est d'utiliser des volants beaucoup plus massifs qui, de ce fait, génèrent des bruits dans des fréquences beaucoup plus basses qui sont donc perçus de façon moins gênante : pour un volant de 220 mm de diamètre, la fréquence propre du volant est proche de 2 000 Hz, alors que pour un volant de 300 mm de diamètre, sa fréquence propre est proche de 1 200 Hz. Les bruits de démarrage étant dus principalement à la transmission par voie solide, le fait de baisser la fréquence propre du volant permet de baisser conjointement la fréquence des bruits de démarrage ayant une fréquence supérieure à celle de la fréquence propre.

Toutefois, pour des raisons d'encombrement et de coût, cette solution ne peut être employée que pour les automobiles de grand confort. De plus, elle ne permet pas de réduire la puissance sonore émise : elle ne fait que diminuer les fréquences des bruits de démarrage qui se trouvent ainsi dans une plage beaucoup plus supportable.

Une autre solution proposée dans l'état de la technique est de fixer la couronne au support par l'intermédiaire d'un matériau souple en matière plastique adhérisée à la fois à la couronne dentée et au support. Bien qu'il se produit alors une légère rotation de l'ensemble de la couronne par rapport au support, le bruit reste important, et cette rotation de l'ensemble de la couronne pose des problèmes concernant la durée de vie de tels volants.

Le problème posé est de diminuer de façon significative la puissance sonore du bruit généré lors du démarrage des moteurs à combustion interne.

Selon la présente invention, le volant du type précité comprend un élément en matière viscoélastique qui est situé entre la surface radiale située à l'extrémité périphérique externe du support et la surface radiale complémentaire située à l'extrémité périphérique interne de la couronne de façon à être mis sous contrainte de compression au moins dans les directions radiale et axiale

En mettant ainsi sous contrainte au moins dans toutes les directions d'une section droite un élément en matière viscoélastique situé entre la surface radiale du support et la surface radiale complémentaire de la couronne, on réduit d'une manière importante le volume sonore : la puissance sonore des bruits ayant une fréquence située au delà de la fréquence propre du volant (2 000 Hz) est réduite d'environ 9 dB. De plus, certains bruits dont la fréquence est plus basse que la fréquence propre du volant voient leur fréquence diminuée.

D'autres particularités de la présente invention ressortiront dans la description qui va suivre du mode de réalisation donné à titre d'exemple non limitatif.
- la figure 1 est une vue en coupe radiale d'un volant selon un premier mode de réalisation de la présente invention ; et
- la figure 2 est une vue en coupe radiale de l'extrémité périphérique d'un volant selon un second mode de réalisation de la présente invention.

Un volant 1 d'un moteur à combustion thermique est relié au moteur via un vilebrequin 2. Le volant 1 comprend un support 3 qui est relié mécaniquement au vilebrequin 2, par exemple par boulonnage, et une couronne dentée 4 qui est reliée au support 3 par frettage, par soudage ou par tout autre système mécanique d'assemblage, par exemple par boulonnage. La couronne dentée 4 est adaptée à être engrenée au pignon du démarreur.

Le support 3 et la couronne dentée 4 présentent, réciproquement, une extrémité périphérique externe 5 et une extrémité périphérique interne 6, l'extrémité périphérique interne 6 de la couronne dentée 4 étant fixée à l'extrémité périphérique externe 5 du support 3.

L'extrémité périphérique externe 5 présente une surface périphérique 7 et une surface radiale 8. De même, l'extrémité périphérique interne 6 présente une surface périphérique complémentaire 9 et une surface radiale complémentaire 10.

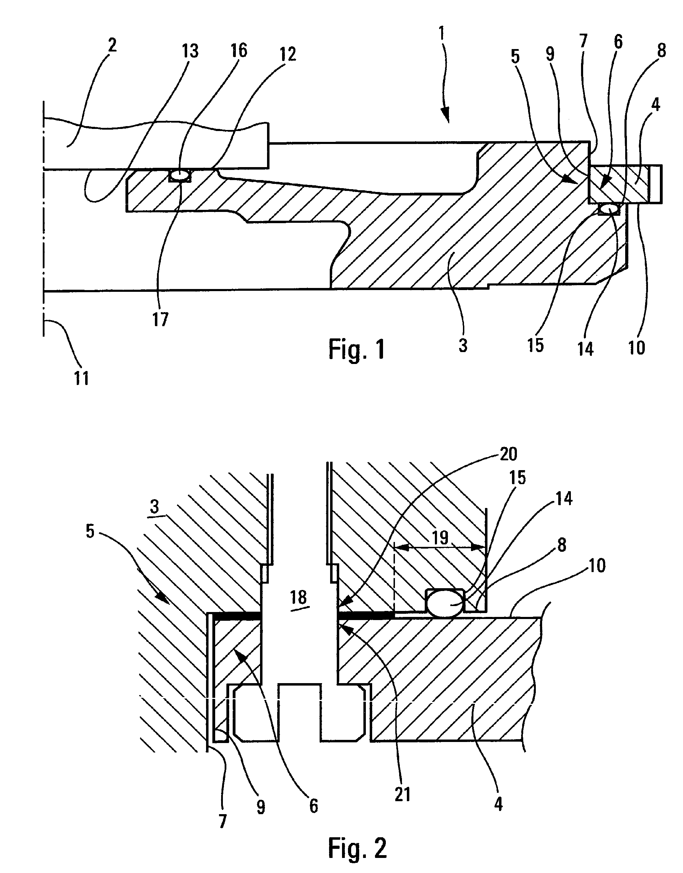

Selon le premier mode de réalisation illustré à la figure 1, la couronne dentée 4 est reliée au support 3 par la fixation de la surface périphérique complémentaire 9 à la surface périphérique 7. Cette fixation peut être faite par frettage ou par soudage. Elle peut être réalisée par tous les moyens décrits dans la demande de brevet européen EP 00 402 629.0.

Selon le second mode de réalisation illustré à la figure 2, la couronne dentée 4 est reliée au support 3 par la fixation de la surface radiale complémentaire 10 à la surface radiale 8 par des vis 18 : Les surfaces périphérique 7 et périphérique complémentaire 9 sont séparées par un jeu évitant tout contact entre ces deux surfaces et permettant notamment d'introduire la couronne 4 autour de la surface 7.

Le support 3 comprend, à proximité de l'axe de rotation 11, une surface radiale d'appui 12 par laquelle il est fixé à une surface radiale de réception 13 du vilebrequin 2.

Selon la présente invention, un élément 14 en matière viscoélastique est disposé entre la surface radiale 8 du support 3 et la surface radiale complémentaire 10 de la couronne 4.

Cet élément 14 en matière viscoélastique est mis sous contrainte dans toutes les directions.

Dans l'exemple illustré aux figures 1 et 2, l'élément 14 en matière viscoélastique est un joint annulaire 14. Ce joint 14 est introduit dans une gorge annulaire 15 réalisée à la surface radiale 8 du support 3, sous contrainte dans les directions radiales et axiales.

La mise sous contrainte du joint annulaire 14 dans la gorge 15 est obtenue par exemple lorsque le volume de la gorge 15 est inférieur au volume du joint annulaire 14 d'environ 5%.

La mise sous contrainte du joint annulaire 14 dans la gorge annulaire 15 dans toutes les directions et le fait que ce joint 14 mis sous contrainte est contact à la fois avec la surface radiale 8 du support 3 et avec la surface radiale complémentaire 10 de la roue dentée 4 permet de réduire considérablement le bruit de démarrage.

En effet, le joint annulaire 14 soumis sous contrainte dans la gorge 15 absorbe la très grande partie des vibrations provenant de la couronne dentée 4.

Selon le mode de réalisation illustré à la figure 2, la gorge annulaire 15 est réalisée dans une couronne radiale 19 qui correspond à la zone dans laquelle la surface radiale 8 n'est pas en contact avec la surface radiale complémentaire 10 de la couronne dentée 4. Le joint annulaire 14 est toutefois en contact avec la surface radiale complémentaire 10 comprise dans cette couronne radiale 19 et est mis sous contrainte dans les directions radiales et axiales malgré la distance séparant la surface radiale 8 de la surface radiale complémentaire 10.

La fabrication d'un volant 1 tel qu'illustré à la figure 2 peut être réalisée, par exemple, en suivant les étapes suivantes :
- en introduisant sous contrainte, le joint annulaire 14 dans la gorge annulaire 15 réalisée à la surface radiale 8,
- en positionnant la surface radiale complémentaire 10 sur la surface radiale 8, la couronne dentée 4 et le support 3 ayant leurs axes de rotation confondus avec celui du volant 1,
- en perçant, selon la direction axiale, en continu, chaque orifice 20 débouchant à la surface radiale 8 avec l'orifice complémentaire 21 le prolongeant, ce qui permet de positionner angulairement et radialement la couronne dentée 4 par rapport au support 3, sans que les écarts dimensionnels des surfaces périphérique 7 et périphérique complémentaire 9 n'interviennent,
- en introduisant une vis 18 dans chaque orifice 20 et orifice complémentaire 21 correspondant de façon à assembler la surface radiale complémentaire 10 de la couronne dentée 4 à la surface radiale 8 du support 3, les orifices 20 et les orifices complémentaires 21 se trouvant naturellement alignés du fait de leur perçage en continu.

Selon un mode de réalisation particulier, illustré à la figure 1, un élément supplémentaire 16 en matière viscoélastique est disposé entre la surface radiale d'appui 12 du support 3 et la surface radiale de réception 13 du vilebrequin 2, et est en contact avec celles-ci.

Cet élément supplémentaire 16 en matière viscoélastique est, comme l'élément 14, mis sous contrainte dans toutes les directions.

Dans l'exemple illustré à la figure 1, l'élément supplémentaire 16 en matière viscoélastique est un joint annulaire supplémentaire 16. Ce joint supplémentaire 16 est introduit sous contrainte dans une gorge annulaire supplémentaire 17 réalisée à la surface radiale d'appui 12 du support 3.

La mise sous contrainte du joint annulaire supplémentaire 16 dans la gorge supplémentaire 17 est obtenu par exemple lorsque le volume de la gorge supplémentaire 17 est inférieur au volume du joint annulaire supplémentaire 16 d'environ 5%.

La mise sous contrainte du joint annulaire supplémentaire 16 dans la gorge annulaire supplémentaire 17 dans toutes les directions et le fait que ce joint supplémentaire 16 mis sous contrainte est contact à la fois avec la surface radiale d'appui 12 du support 3 et avec la surface radiale de réception 13 du vilebrequin 2 permet d'avoir une réduction supplémentaire du bruit de démarrage.

La couronne dentée 4 est fixée au support 3 soit par l'intermédiaire de la surface périphérique 7 et de la surface périphérique complémentaire 9 (pour frettage ou par soudage), soit par l'intermédiaire de boulons, et, en conséquence, une partie des vibrations sont transmises de la couronne dentée 4 vers le support 3 par ces moyens de fixation malgré la présence du joint annulaire 14.

Le joint annulaire supplémentaire 16 permet d'absorber une très grande partie de ces vibrations résiduelles provenant de la couronne dentée 4 transmises au support 3.

En utilisant un volant muni d'un joint annulaire 14 et d'un joint annulaire supplémentaire 16, la puissance sonore des bruits de démarrage est considérablement diminuée.

Cette diminution est d'environ 9 dB pour les bruits ayant des fréquences élevées (supérieure à 2 000 Hz), c'est à dire une fréquence égale ou supérieure à la fréquence propre du volant 1.

Cette diminution du volume sonore est d'autant plus appréciable qu'elle concerne les bruits ayant des fréquences jugées agressives. De plus, cette diminution du volume sonore général, et principalement des fréquences élevées, est accompagnée d'une diminution de la fréquence de certains bruits, notamment ceux dont la fréquence est légèrement plus faible que le fréquence propre.

La matière viscoélastique utilisée pour la réalisation de l'élément 14 et l'élément supplémentaire 16 est par exemple un fluoro-élastomère, du néoprène, du silicone, des polymères à base nitrile...

De manière générale, la matière est telle que la déformation rémanente après contrainte est comprise entre 10 et 20 %.

Il apparaît clairement à la lecture de cette description qu'un avantage important de cette invention est qu'elle peut être appliquée à tout type de volant de démarrage et présente un surcoût très modeste.

Enfin, cette invention peut être employée avec d'autres dispositifs, comme par exemple, isoler le démarreur en mettant un élément de liaison élastique en rotation avec le pignon et l'arbre du démarreur qui peut être un ressort ou un amortisseur en élastomère pour assurer un découplage des vibrations transmises par voie solide, en mettant une plaque en élastomère entre le démarreur et le moteur ou le carter d'embrayage, en utilisant des vis de fixation et un pion d'indexage en matière plastique, ou en enveloppant le corps du démarreur d'un matelas d'isolation phonique, etc.

L'association de tous ces dispositifs s'ils sont employés en combinaison avec la présente invention, permet de réduire la puissance sonore des bruits de démarrage jusqu'à 12 dB et, pour les bruits ayant des fréquences élevées (supérieures à 2 000 Hz), jusqu'à 25 dB.

De façon plus précise, les mesures effectuées par la Demanderesse montrent que le volant selon la présente invention réduit de façon notable à la fois le bruit de pénétration des dents du pignon entre les dents de la couronne, et le bruit d'engrènement.

Bien évidemment, l'invention n'est pas limitée aux modes de réalisation décrits en détail ci-dessus, et on peut apporter à ceux-ci de nombreux changements et modifications sans sortir du domaine de l'invention. Par exemple, il serait tout à fait possible de réaliser la gorge annulaire 15 sur la surface radiale complémentaire 10 de la couronne dentée 4 ou de réaliser la gorge annulaire supplémentaire 17 sur la surface radiale de réception 13 du vilebrequin 2.

## Revendications

1. Volant (1) d'un moteur à combustion interne, comprenant un support (3) apte à être monté axialement sur l'arbre de sortie du moteur et une couronne dentée (4) possédant une extrémité périphérique interne (6) par laquelle elle est fixée à l'extrémité périphérique externe (5) du support (3), l'extrémité périphérique externe (5) du support (3) comprenant une surface radiale (8), et l'extrémité périphérique interne (6) de la couronne dentée (4) comprenant une surface radiale complémentaire (10), une gorge annulaire (15), dans laquelle est logé sous contrainte de compression un joint annulaire (14) en matériau viscoélastique, étant réalisée à une première surface radiale (8) formée par la surface radiale (8) du support (3) ou la surface radiale complémentaire (10) de la couronne dentée (4), **caractérisé en ce que** la gorge (15) est, d'une part, délimitée radialement par deux surfaces de délimitation qui se font face et qui sont portées par la première surface radiale (8), et d'autre part, recouverte par la seconde (10) des deux surfaces radiales (8,10) qui est en contact avec le joint annulaire (14) de façon à ce que ce dernier soit mis sous contrainte de compression dans les directions radiale et axiale.

2. Volant (1) selon la revendication 1, **caractérisé en ce que** le volume de la gorge (15) est inférieur au volume du joint annulaire (14) d'environ 5%.

3. Volant (1) selon la revendication 1 ou 2, **caractérisé en ce que** la couronne dentée (4) est reliée au support (3) par la fixation de la surface périphérique complémentaire (9) de la couronne dentée (4) à la surface périphérique (7) du support (3).

4. Volant (1) selon la revendication 1 ou 2, **caractérisé en ce que** la couronne dentée (4) est reliée au support (3) par la fixation de la surface radiale complémentaire (10) à la surface radiale (8) par boulonnage.

5. Volant (1) selon la revendication 4, **caractérisé en ce que** la gorge annulaire (15) est réalisée dans une couronne radiale (19) qui correspond à la zone dans laquelle la surface radiale (8) n'est pas en contact avec la surface radiale complémentaire (10).

6. volant (1) selon l'une des revendications 1 à 5, **caractérisé en ce que** le support (3) comprend une surface radiale d'appui (12) par laquelle il est fixé à une surface radiale de réception (13) d'un organe (2) solidaire de l'arbre de sortie du moteur, une gorge annulaire supplémentaire (17), dans laquelle est logé sous contrainte de compression un joint annulaire supplémentaire (16) en matière viscoélastique, étant réalisée à une première surface radiale supplémentaire formée par la surface radiale d'appui (12) du support (3) ou la surface radiale de réception (13) de l'organe (2), la gorge supplémentaire (17) étant, d'une part, délimitée radialement par deux surfaces supplémentaires de délimitation qui se font face et qui sont portées par la première surface radiale supplémentaire, et d'autre part, recouverte par la seconde des deux surfaces radiales supplémentaires (12,13) qui est en contact avec le joint annulaire supplémentaire (16) de façon à ce que ce dernier soit mis sous contrainte de compression dans les directions radiale et axiale.

7. Volant (1) selon la revendication 6, **caractérisé en ce que** le volume de la gorge supplémentaire (17) est inférieur au volume du joint annulaire supplémentaire (16) d'environ 5%.

8. Procédé de fabrication d'un volant (1) par assemblage d'une couronne dentée (4) possédant une extrémité périphérique interne (6) comprenant en coupe radiale une surface radiale complémentaire (10) à un support (3) possédant une extrémité périphérique externe (5) comprenant en coupe radiale une surface radiale (8), dans lequel on réalise les étapes suivantes :
- on introduit sous contrainte, un joint annulaire (14) dans une gorge annulaire (15) réalisée à la surface radiale (8) et délimitée radialement par deux surfaces de délimitation qui se font face et qui sont portées par la surface radiale (8),
- on positionne de façon coaxiale la surface radiale complémentaire (10) sur la surface radiale (8) de sorte que la surface radiale complémentaire (10) recouvre la gorge annulaire (15) et vienne en contact avec le joint annulaire (14),
- on perce en continu selon la direction de l'axe de rotation du volant (1) des orifices (20) débouchant à la surface radiale (8) et des orifices complémentaires (21) débouchant à la surface radiale complémentaire (10) et prolongeant les orifices (20), et
- on introduit un boulon (17) dans chaque orifice (20) et orifice complémentaire (21) correspondant de façon à assembler la surface radiale complémentaire (10) à la surface radiale (8).

9. Moteur **caractérisé en ce qu**'il comprend un volant (1) selon l'une des revendications 1 à 7.

10. Moteur selon la revendication 9, **caractérisé en ce qu'**une plaque en élastomère est située entre le démarreur et le bloc moteur.

11. Moteur selon la revendication 9 ou 10, **caractérisé en ce que** le démarreur est enveloppé dans un matelas d'isolation phonique.

## Claims

1. Flywheel (1) for an internal combustion engine, comprising a bracket (3) capable of being mounted axially on the engine output shaft and a gear ring (4) having an internal peripheral extremity (6) by which it is fixed to the external peripheral extremity (5) of the bracket (3), the external peripheral extremity (5) of the bracket (3) comprising a radial surface (8), and the internal peripheral extremity (6) of the gear ring (4) comprising a complementary radial surface (10), an annular groove (15), in which is held under compression an annular seal (14) made from a visco-elastic material, being produced at a first radial surface (8) formed by the radial surface (8) of the bracket (3) or the complementary radial surface (10) of the gear ring (4), **characterized in that** the groove (15) is, first, delineated radially by two delineating surfaces facing each other and which are supported by the first radial surface (8), and second, covered by the second (10) of the two radial surfaces (8, 10) which is in contact with the annular seal (14) such that the latter is held under compression in the radial and axial directions.

2. Flywheel (1) in accordance with claim 1, **characterized in that** the volume of the groove (15) is less than the volume of the annular seal (14) by approximately 5%.

3. Flywheel (1) in accordance with claim 1 or claim 2, **characterized in that** the gear ring (4) is connected to the bracket (3) by the fixing of the complementary peripheral surface (9) of the Gear ring (4) to the peripheral surface (7) of the bracket (3).

4. Flywheel (1) in accordance with either of claims 1 and 2, **characterized in that** the gear ring (4) is connected to the bracket (3) by the fixing of the complementary radial surface (10) to the radial surface (8) by bolting.

5. Flywheel (1) in accordance with claim 4, **characterized in that** the annular groove (15) is produced in a radial crown (19) which corresponds to the area in which the radial surface (8) is not in contact with the complementary radial surface (10).

6. Flywheel (1) in accordance with one of claims 1 to 5, **characterized in that** the bracket (3) comprises a supporting radial surface (12) by which it is fixed to a radial accommodation surface (13) of a device (2) integral with the engine output shaft, a supplementary annular groove (17), in which is held under compression a supplementary annular seal (16) made from visco-elastic material, being produced at a first supplementary radial surface formed by the supporting radial surface (12) of the bracket (3) or the radial accommodation surface (13) of the device (2), the supplementary groove (17) being, first, delineated radially by two supplementary delineating surfaces facing each other and which are supported by the first supplementary radial surface, and second, covered by the second of the two supplementary radial surfaces (12, 13) which is in contact with the second annular seal (16) such that the latter is held under compression in the radial and axial directions.

7. Flywheel (1) in accordance with claim 6, **characterized in that** the volume of the supplementary groove (17) is less than the volume of the supplementary annular seal (16) by approximately 5%.

8. Method for manufacturing a flywheel (1) by assembling a gear ring (4) having an internal peripheral extremity (6) comprising in radial section a complementary radial surface (10) at a bracket (3) having an external peripheral extremity (5) comprising in radial section a radial surface (8), in which are executed the following steps:
- an annular seal (14) is forced into an annular groove (15) produced at the radial surface (8) and delineated radially by two delineating surfaces facing each other and which are supported by the radial surface (8),
- the complementary radial surface (10) is positioned over the radial surface (8) such that the complementary radial surface (10) covers the annular groove (15) and comes into contact with the annular seal (14),
- orifices (20) opening out on to the radial surface (8) and complementary orifices (21) opening out on to the complementary radial surface (10) and extending the orifices (20) are continuously drilled in the direction of the axis of rotation of the flywheel (1), and
- a bolt (17) is placed in each orifice (20) and its corresponding complementary orifice (21) so as to join the complementary radial surface (10) to the radial surface (8).

9. Engine, **characterized in that** it includes a flywheel (1) in accordance with one of claims 1 to 7.

10. Engine in accordance with claim 9, **characterized in that** an elastomer disc is situated between the starter and the engine block.

11. Engine in accordance with claim 9 or claim 10, **characterized in that** the starter is encased in a sound isolating cover.

## Patentansprüche

1. Schwungrad (1) für Verbrennungsmotor, umfassend einen an der Motorabtriebswelle axial montierbaren Träger (3) und einen Zahnkranz (4) mit einem inneren Umfangsendabschnitt (6), mit dem es an dem äußeren Umfangsendabschnitt (5) des Trägers (3) befestigt ist, wobei der äußere Umfangsendabschnitt (5) des Trägers (3) eine radiale Fläche (8) aufweist und der innere Umfangsendabschnitt (6) des Zahnkranzes (4) eine radiale Gegenfläche (10) aufweist, wobei eine Ringnut (15), in welcher eine Ringdichtung (14) aus viskoelastischem Material unter Druckspannung aufgenommen ist, an einer ersten radialen Fläche (8) ausgebildet ist, die von der radialen Fläche (8) des Trägers (3) oder von der radialen Gegenfläche (10) des Zahnkranzes (4) gebildet wird, **dadurch gekennzeichnet, dass** die Nut (15) einerseits von zwei Begrenzungsflächen radial begrenzt wird, die einander gegenüberliegen und von der ersten radialen Fläche (8) getragen werden, und andererseits von der zweiten (10) der beiden radialen Flächen (8, 10) überdeckt wird, die mit der Ringdichtung (14) dergestalt in Kontakt steht, dass letztere in radialer und in axialer Richtung unter Druckspannung steht.

2. Schwungrad (1) nach Anspruch 1, **dadurch gekennzeichnet, dass** das Volumen der Nut (15) um etwa 5 % kleiner ist als das Volumen der Ringdichtung (14).

3. Schwungrad (1) nach Anspruch 1 oder 2, **dadurch gekennzeichnet, dass** der Zahnkranz (4) durch Befestigung der Umfangsgegenfläche (9) des Zahnkranzes (4) an der Umfangsfläche (7) des Trägers (3) mit dem Träger (3) verbunden ist.

4. Schwungrad (1) nach Anspruch 1 oder 2, **dadurch gekennzeichnet, dass** der Zahnkranz (4) durch Befestigung der radialen Gegenfläche (10) mittels Verschraubung an der radialen Fläche (8) mit dem Träger (3) verbunden ist.

5. Schwungrad (1) nach Anspruch 4, **dadurch gekennzeichnet, dass** die Ringnut (15) in einem radialen Kranz (19) ausgebildet ist, welcher dem Bereich entspricht, in welchem die radiale Fläche (8) nicht mit der radialen Gegenfläche (10) in Kontakt steht.

6. Schwungrad (1) nach einem der Ansprüche 1 bis 5, **dadurch gekennzeichnet, dass** der Träger (3) eine radiale Abstützfläche (12) umfasst, mit welcher er an einer radialen Aufnahmefläche (13) eines fest mit der Motorabtriebswelle verbundenen Organs (2) befestigt ist, wobei eine zusätzliche Ringnut (17), in welcher eine zusätzliche Ringdichtung (16) aus viskoelastischem Material unter Druckspannung aufgenommen ist, an einer ersten radialen Zusatzfläche ausgebildet ist, die von der radialen Abstützfläche (12) des Trägers (3) oder von der radialen Aufnahmefläche (13) des Organs (2) gebildet wird, wobei die zusätzliche Nut (17) einerseits von zwei zusätzlichen Begrenzungsflächen radial begrenzt wird, die einander gegenüberliegen und von der ersten radialen Zusatzfläche getragen werden, und andererseits von der zweiten der beiden radialen Zusatzflächen (12, 13) überdeckt wird, die mit der zusätzlichen Ringdichtung (16) dergestalt in Kontakt steht, dass letztere in radialer und in axialer Richtung unter Druckspannung steht.

7. Schwungrad (1) nach Anspruch 6, **dadurch gekennzeichnet, dass** das Volumen der zusätzlichen Nut (17) um etwa 5 % kleiner ist als das Volumen der zusätzlichen Ringdichtung (16).

8. Verfahren zum Herstellen eines Schwungrads (1) durch Zusammenbau eines Zahnkranzes (4), der einen inneren Umfangsendabschnitt (6) besitzt, welcher im radialen Schnitt eine radiale Zusatzfläche (10) aufweist, mit einem Träger (3), der einen äußeren Umfangsendanschnitt (5) besitzt, welcher im radialen Schnitt eine radiale Fläche (8) aufweist, wobei folgende Schritte durchgeführt werden:
- eine Ringdichtung (14) wird unter Spannung in eine Ringnut (15) eingeführt, die an der radialen Fläche (8) ausgebildet ist und von zwei Begrenzungsflächen radial begrenzt wird, die einander gegenüberliegen und von der radialen Fläche (8) getragen werden,
- die radiale Gegenfläche (10) wird koaxial so an die radiale Fläche (8) positioniert, dass die radiale Gegenfläche (10) die Ringnut (15) überdeckt und mit der Ringdichtung (14) in Kontakt gelangt,
- in Richtung der Drehachse des Schwungrads (1) werden durchgehend Öffnungen (20) gebohrt, die an der radialen Fläche (8) ausmünden, sowie Gegenöffnungen (21), die an der radialen Gegenfläche (10) ausmünden und die Öffnungen (20) verlängern, und
- ein Bolzen (17) wird in jede Öffnung (20) und entsprechende Gegenöffnung (21) so eingeführt, dass die radiale Gegenfläche (10) an die radiale Fläche (8) angefügt wird.

9. Motor, **dadurch gekennzeichnet, dass** er ein Schwungrad (1) nach einem der Ansprüche 1 bis 7 enthält.

10. Motor nach Anspruch 9, **dadurch gekennzeichnet, dass** eine Platte aus Elastomer zwischen Anlasser und Motorblock liegt.

11. Motor nach Anspruch 9 oder 10, **dadurch gekennzeichnet, dass** der Anlasser in einer Schalldämmmatte eingebettet ist.
